(19) Europäisches Patentamt / European Patent Office / Office européen des brevets

(11) **EP 4 110 739 B1**

(12) **FASCICULE DE BREVET EUROPEEN**

(45) Date de publication et mention
de la délivrance du brevet:
**31.12.2025 Bulletin 2026/01**

(21) Numéro de dépôt: **21711310.9**

(22) Date de dépôt: **25.02.2021**

(51) Classification Internationale des Brevets (IPC):
***C03C 17/36*** *(2006.01)*

(52) Classification Coopérative des Brevets (CPC):
**C03C 17/36; C03C 17/3626; C03C 17/3636;
C03C 17/3639; C03C 17/3649; C03C 17/3652;
C03C 17/366; C03C 17/3681**

(86) Numéro de dépôt international:
**PCT/FR2021/050326**

(87) Numéro de publication internationale:
**WO 2021/170959 (02.09.2021 Gazette 2021/35)**

(54) **VITRAGE DE CONTROLE SOLAIRE COMPRENANT UNE COUCHE DE NITRURE DE TITANE**

SONNENSCHUTZVERGLASUNG MIT EINER SCHICHT AUS TITANNITRID

SOLAR-CONTROL GLAZING COMPRISING A LAYER OF TITANIUM NITRIDE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.02.2020 FR 2002035**

(43) Date de publication de la demande:
**04.01.2023 Bulletin 2023/01**

(73) Titulaire: **Saint-Gobain Glass France
92400 Courbevoie (FR)**

(72) Inventeurs:
• **MONMEYRAN, Corentin
75019 PARIS (FR)**
• **MANCINI, Lorenzo
91400 ORSAY (FR)**
• **DEHAUPAS, Alexandre
93250 VILLEMOMBLE (FR)**
• **SINGH, Laura Jane
75019 PARIS (FR)**

(74) Mandataire: **Saint-Gobain Recherche
41 Quai Lucien Lefranc
93300 Aubervilliers (FR)**

(56) Documents cités:
**WO-A1-02/48065          WO-A1-2012/020189
WO-A2-2009/112759**

## Description

L'invention concerne les vitrages isolants dits de contrôle solaire, munis d'empilements de couches minces dits fonctionnels, c'est-à-dire agissant sur le rayonnement solaire et/ou thermique essentiellement par réflexion et/ou absorption du rayonnement infrarouge proche (solaire) ou lointain (thermique). L'application plus particulièrement visée par l'invention est en premier lieu le domaine du bâtiment, en tant que vitrage de contrôle solaire. Sans sortir du cadre de l'invention le présent vitrage peut également être utilisé dans les vitrages de véhicules, comme les verres latéraux, les toits-autos, les lunettes arrières.

Par vitrage, on entend au sens de la présente invention tout produit verrier constitué par un ou plusieurs substrats verriers, en particulier les simples vitrages, les doubles vitrages, les triples vitrages etc.

On entend par couche «fonctionnelle» ou encore «active», au sens de la présente demande, les couches de l'empilement qui confèrent à l'empilement l'essentiel de ses propriétés d'isolation thermique. Le plus souvent les empilements en couches minces équipant le vitrage lui confèrent des propriétés sensiblement améliorées d'isolation très essentiellement par les propriétés intrinsèques desdites couches actives. Lesdites couches agissent sur le flux de rayonnement infrarouge thermique traversant ledit vitrage, par opposition aux autres couches, généralement en matériau diélectrique et ayant le plus souvent principalement pour fonction une protection chimique ou mécanique desdites couches fonctionnelles. Par matériau diélectrique, on entend un matériau dont la forme massive et dénuée d'impuretés ou de dopants présente une forte résistivité, notamment une résistivité initialement supérieure à $10^{10}$ ohms.mètres ($\Omega$.m) à la température ambiante (300K).

De tels vitrages munis d'empilements de couches minces agissent sur le rayonnement IR incident soit essentiellement par l'absorption dudit rayonnement par la ou les couches fonctionnelles, soit essentiellement par réflexion par ces mêmes couches.

Ils sont regroupés sous la désignation de vitrage de contrôle solaire. Ils sont commercialisés et utilisés essentiellement :

- soit pour assurer essentiellement une protection de l'habitation du rayonnement solaire ou de l'habitacle (automobile) et en éviter une surchauffe, de tels vitrages étant qualifiés dans le métier d'antisolaire,
- soit essentiellement pour assurer une isolation thermique de l'habitation et éviter les déperditions de chaleur, ces vitrages étant qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle.

Par isolant thermique, on entend un vitrage muni d'au moins une couche fonctionnelle lui conférant une déperdition énergétique diminuée, ladite couche présentant des propriétés de réflexion du rayonnement IR compris entre 5 et 50 micromètres. Les couches fonctionnelles utilisées dans cette fonction présentent un coefficient de réflexion du rayonnement IR élevé et sont dites bas-émissives (ou low-e selon le terme anglais).

Dans certains pays, les normes impliquent que les vitrages présentent des propriétés à la fois antisolaire et d'isolation thermique pour les vitrages de bâtiment. Par bas émissif, on entend un vitrage muni d'au moins une couche fonctionnelle lui conférant une émissivité normale $\varepsilon_n$ (ou émissivité totale à incidence normale) inférieure à 50%, de préférence inférieure à 45% voire inférieure à 40%, l'émissivité étant définie par la relation :

$$\varepsilon_n = 1 - R_n,$$

dans laquelle $R_n$ est le facteur de réflexion selon la normale (selon l'annexe A de la norme internationale ISO 10292 (1994)) du vitrage.

La notion de vitrage bas émissifs est notamment décrite dans l'article de référence des Techniques De l'Ingénieur : « Vitrages à isolation thermique renforcée », C3635 (1999).

D'une manière générale, toutes les caractéristiques énergétiques présentées dans la présente description sont obtenues selon les principes et méthodes décrits dans la norme internationale ISO 10292 (1994), se rapportant à la détermination des caractéristiques d'isolation énergétiques des vitrages utilisés dans le verre pour la construction.

Ces revêtements sont de façon classique déposés par des techniques de dépôt du type CVD pour les plus simples ou le plus souvent à l'heure actuelle par des techniques de dépôt par pulvérisation sous vide, souvent appelé magnétron dans le domaine, notamment lorsque le revêtement est constitué d'un empilement complexe de couches successives dont les épaisseurs ne dépassent pas quelques nanomètres ou quelques dizaines de nanomètres.

Le plus souvent les empilements en couches minces présentent des propriétés de contrôle solaire essentiellement par les propriétés intrinsèques d'une ou plusieurs couches actives, désignées comme fonctionnelles dans la présente description. Par couche active ou fonctionnelle, on entend ainsi une couche agissant de manière sensible sur le

**EP 4 110 739 B1**

flux de rayonnement solaire traversant ledit vitrage. Une telle couche active, de façon connue, peut fonctionner soit principalement en mode de réflexion du rayonnement infrarouge incident, soit principalement en mode d'absorption dudit rayonnement infrarouge. Le plus souvent, ces couches antisolaires fonctionnent pour partie par réflexion et pour partie par absorption, comme déjà expliqué précédemment.

Notamment, les empilements les plus performants commercialisés à l'heure actuelle incorporent au moins une couche fonctionnelle métallique du type argent fonctionnant essentiellement sur le mode de la réflexion d'une majeure partie du rayonnement IR (infrarouge) incident. Leur émissivité normale ne dépasse pas quelques pourcents. Ces empilements sont ainsi utilisés principalement en tant que vitrages du type bas émissifs (ou low-e en anglais) pour l'isolation thermique des bâtiments. Ces couches sont cependant sensibles à l'humidité et sont donc exclusivement utilisées dans des doubles vitrages, en face 2 ou 3 de celui-ci pour être protégées de l'humidité. Les empilements selon l'invention ne comprennent pas de telles couches du type argent, ou encore de couches du type or ou platine ou alors en quantités très négligeables, notamment sous formes d'impuretés inévitables.

D'autres couches métalliques à fonction antisolaire ont également été reportées dans le domaine, comprenant des couches fonctionnelles du type Nb, Ta ou W ou des nitrures de ces métaux, tel que décrit par exemple dans la demande WO01/21540. Au sein de telles couches, le rayonnement solaire est cette fois majoritairement absorbé de manière non sélective par la ou les couches fonctionnelles, c'est-à-dire que le rayonnement IR (c'est-à-dire dont la longueur d'onde est compris entre environ 780 nm et 2500 nm) et le rayonnement visible (dont la longueur d'onde est compris entre environ et 380 et 780 nm) sont absorbés/réfléchis sans distinction. Dans de tels vitrages, les valeurs de l'émissivité normale $\varepsilon_n$ sont en général plus élevées. Des valeurs d'émissivité plus faibles peuvent uniquement être obtenues lorsque la couche fonctionnelle est relativement épaisse, en particulier d'au moins 20 nm pour le niobium métallique. En raison de l'absorption non sélective de cette même couche, les coefficients de transmission lumineuse de tels vitrages sont nécessairement très faibles, généralement inférieurs à 30%. Au final, au vu de telles caractéristiques, il n'apparait pas possible d'obtenir à partir de tels empilements des vitrages de contrôle solaire combinant des émissivités normales relativement basses, typiquement inférieures à 50%, et notamment de l'ordre de 40% ou même 35%, tout en conservant une transmission lumineuse suffisamment élevée, c'est à dire typiquement supérieure à 30%.

Les caractéristiques lumineuses et en particulier la transmission lumineuse sont mesurées selon la présente invention selon les principes décrits dans la norme NF EN410 (2011).

Dans d'autres publications, il a été proposé d'utiliser comme couche fonctionnelle un matériau à base de nitrure de titane (TiN), qui présente également des propriétés bas-émissives et sont moins sujettes à la corrosion que les couches à base d'argent. On peut notamment citer les publications DE102014114330, DE102013112990 ou encore JPH05124839. L'objet de la présente invention porte sur des vitrages de contrôle solaire incorporant des empilements comprenant de telles couches et vise plus particulièrement à améliorer les propriétés de celles-ci, et plus particulièrement les propriétés combinées de forte transmission lumineuse et de faible émissivité de tels vitrages.

La publication WO02/48065 décrit un empilement comprenant des couches fonctionnelles réfléchissant l'infrarouge à base d'argent et des couches absorbantes, lesdites couches absorbantes pouvant être en un nitrure métallique tel que le nitrure de titane, de niobium, de zirconium de chrome ou de NiCr.

Le but de la présente invention est ainsi de fournir des vitrages comprenant un empilement de couches leur conférant des propriétés de contrôle solaire telles que précédemment décrites, tout en présentant une transmission lumineuse $T_L$ typiquement supérieure à 30%, de préférence supérieure ou égale à 40%, ou même supérieure ou égale à 50%, et une émissivité normale $\varepsilon_n$ faible c'est-à-dire inférieure à 50%, voire inférieure à 45% ou même inférieure à 40%, ledit empilement étant durable dans le temps, notamment lorsqu'il est directement disposé sur une face du vitrage exposé vers l'intérieur ou même l'extérieur du bâtiment ou de l'habitacle, sans précaution particulière.

Au sens de la présente invention, il est donc recherché des vitrages présentant le plus grand rapport $T_L/\varepsilon_n$, c'est à dont la sélectivité est améliorée, un vitrage au sens de la présente invention laisse donc passer une majeure partie de lumière dans le domaine du visible tout en réfléchissant une majeure partie du rayonnement IR proche après un traitement thermique tel qu'une trempe, un bombage, un recuit etc...

Ainsi, la présente invention permet l'obtention de vitrages antisolaires capables de subir un traitement thermique tel qu'une trempe, un bombage ou plus généralement un traitement thermique à des températures supérieures à 500°C, ledit traitement permettant notamment d'améliorer les propriétés optiques et énergétiques de ceux-ci, et notamment leur sélectivité.

Un vitrage selon l'invention permet également de sélectionner le rayonnement le traversant, en favorisant plutôt la transmission des ondes lumineuses, c'est-à-dire dont la longueur d'onde est comprise entre environ 380 et 780 nm et en limitant la traversée du rayonnement infrarouge, dont la longueur d'onde est supérieure à 780 nm.

Selon l'invention, il devient ainsi possible de maintenir une forte illumination de la pièce ou de l'habitacle protégé par le vitrage, tout en minimisant la quantité de chaleur y entrant.

Selon un autre aspect, le vitrage selon la présente invention présente également des propriétés d'isolation thermique grâce aux propriétés bas-émissives de la couche utilisée, permettant de limiter les échanges de chaleur entre l'intérieur et l'extérieur du bâtiment.

3

Selon un autre avantage de la présente invention, les vitrages munis des empilements selon l'invention sont simples à produire, par rapport à d'autres vitrages connus à propriétés antisolaires, notamment ceux comprenant un empilement à base d'argent.

En outre, ils sont résistants à l'humidité, à la rayure et aux attaques acides. En particulier, les vitrages selon l'invention présentent une longévité améliorée, dans le sens où leurs propriétés initiales d'isolation thermique ou solaire ne varient que très faiblement sous les agressions chimiques auxquelles ils sont soumis au cours de leur utilisation prévue.

Ils peuvent ainsi être avantageusement être utilisés en tant que vitrage simple (un seul substrat verrier), l'empilement étant préférentiellement tourné vers la face interne du bâtiment ou de l'habitacle à protéger.

Plus particulièrement, la présente invention se rapporte à un article verrier à propriétés antisolaires comprenant au moins un substrat verrier muni d'un empilement de couches, dans lequel l'empilement comprend et de préférence est constitué par, successivement depuis la surface dudit substrat :

- un premier module $M_1$ constitué par une couche à base d'un matériau diélectrique d'épaisseur $e_1$ ou par un ensemble de couches à base de matériaux diélectriques d'épaisseur cumulée $e_1$ comprise entre 1 et 100 nm,
- une couche $TN_1$ comprenant du nitrure de titane, de préférence à base de nitrure de titane, ou même constituée essentiellement de nitrure de titane, d'épaisseur comprise entre 2 nanomètres et 80 nanomètres, de préférence entre 4 et 70 nanomètres, de préférence encore comprise entre 10 et 50 nm,
- un second module $M_2$ constitué par une couche à base d'un matériau diélectrique d'épaisseur $e_2$ ou par un ensemble de couches à base de matériaux diélectriques d'épaisseur cumulée $e_2$ comprise entre 1 et 100 nm,
- éventuellement une couche de protection comprenant ou de préférence à base d'un oxyde de titane, d'un oxyde de zirconium, ou d'un oxyde de titane et de zirconium,

Selon l'invention l'empilement comprend en outre une couche intermédiaire comprenant, et de préférence constituée essentiellement par, voire est constituée par, au moins un élément choisi parmi le silicium, l'aluminium, le titane ou un mélange d'au moins deux de ces éléments, ladite couche intermédiaire étant déposée entre ladite couche $TN_1$ et ledit premier module $M_1$ et/ou entre ladite couche $TN_1$ et ledit second module $M_2$, la ou lesdites couche(s) intermédiaire(s) étant d'épaisseur comprise entre 0,2 nm et 6 nm, de préférence entre 0,5 et 5 nm, de préférence encore entre 1 et 4 nm et l'empilement ne contient pas de couche à base d'argent, de platine ou d'or.

Selon des modes de réalisations préférés de la présente invention, qui peuvent bien évidemment être combinés le cas échéant entre eux :

- Ledit élément déposé pour constituer la ou les couches intermédiaires est essentiellement l'aluminium. Selon ce mode, une couche constituée essentiellement, voire constituée, d'aluminium est donc déposé entre ladite couche $TN_1$ et ledit premier module $M_1$ et/ou ledit second module $M_2$ pour former ladite couche intermédiaire (notamment par pulvérisation cathodique assistée par magnétron d'une cible en aluminium sous atmosphère d'un gaz neutre tel que l'argon).
- Ledit élément déposé pour constituer la ou les couches intermédiaires est essentiellement le silicium. Selon ce mode, une couche constituée essentiellement, voire constituée, de silicium est donc déposée entre ladite couche $TN_1$ et ledit premier module $M_1$ et/ou ledit second module $M_2$ pour former ladite couche intermédiaire (notamment par pulvérisation cathodique assistée par magnétron d'une cible en silicium sous atmosphère d'un gaz neutre tel que l'argon).
- Ledit élément déposé pour constituer la ou les couches intermédiaires est essentiellement le titane. Selon ce mode, une couche constituée essentiellement, voire constituée, de titane est donc déposée entre ladite couche $TN_1$ et ledit premier module $M_1$ et/ou ledit second module $M_2$ pour former ladite couche intermédiaire (notamment par pulvérisation cathodique assistée par magnétron d'une cible en titane sous atmosphère d'un gaz neutre tel que l'argon). De façon préférée, le titane est au moins déposé entre ladite couche $TN_1$ et ledit second module $M_2$ pour former ladite couche intermédiaire. Selon un autre mode, une couche de titane est déposée entre ladite couche $TN_1$ et ledit premier module $M_1$ et une couche de titane est déposée entre ladite couche $TN_1$ ledit second module $M_2$ pour former deux couches intermédiaires, de part et d'autre de la couche $TN_1$.
- Ledit élément déposé pour constituer la ou les couches intermédiaires est essentiellement un mélange d'aluminium et de silicium. Selon ce mode, une couche constituée essentiellement, voire constituée, d'aluminium et de silicium est donc déposée entre ladite couche $TN_1$ et ledit premier module $M_1$ et/ou ledit second module $M_2$ pour former ladite couche intermédiaire (notamment par pulvérisation cathodique assistée par magnétron d'une cible en silicium sous atmosphère d'un gaz neutre tel que l'argon). Selon ce mode, le ratio massique Si/Al peut varier entre 99/1 et 1/99. En particulier il peut être compris entre 97/35 et 75/25, notamment entre 95/5 et 80/20.
- Les éléments déposés pour constituer la ou les couches intermédiaires sont le silicium et le titane. Selon ce mode, un mélange constitué essentiellement de silicium et de titane est donc déposé entre ladite couche $TN_1$ et ledit premier module $M_1$ et/ou ledit second module $M_2$ pour former ladite couche intermédiaire (notamment par pulvérisation cathodique assistée par magnétron d'une cible comprenant un mélange de silicium et de titane sous atmosphère d'un gaz neutre tel que l'argon). Selon ce mode, le ratio massique Si/Ti peut varier entre 99/1 et 1/99. En particulier il peut être compris entre 97/35 et 75/25, notamment entre 95/5 et 80/20.

- Les éléments déposés pour constituer la ou les couches intermédiaires sont l'aluminium et le titane. Selon ce mode, un mélange constitué essentiellement d'aluminium et de titane est donc déposé entre ladite couche $TN_1$ et ledit premier module $M_1$ et/ou ledit second module $M_2$ pour former ladite couche intermédiaire (notamment par pulvérisation cathodique assistée par magnétron d'une cible comprenant un mélange d'aluminium et de titane sous atmosphère d'un gaz neutre tel que l'argon). Selon ce mode, le ratio massique Al/Ti peut varier entre 99/1 et 1/99. En particulier il peut être compris entre 97/35 et 75/25, notamment entre 95/5 et 80/20.

- Les couches à base de matériaux diélectriques constituant l'ensemble de couches d'épaisseur cumulée $e_1$ sont déposées successivement et au contact les unes des autres.

- Les couches à base de matériaux diélectriques constituant l'ensemble de couches d'épaisseur cumulée $e_2$ sont déposées successivement et au contact les unes des autres.

- La couche $TN_1$ et la (ou les) couche(s) intermédiaire(s) est (sont) au contact les unes des autres.

- Le module $M_1$, la couche $TN_1$, le module $M_2$ et la ou les couches intermédiaires sont déposés successivement et au contact les uns des autres.

- Les modules $M_1$, $M_2$ comprennent et de préférence sont à base de matériaux choisis parmi un nitrure de silicium, un nitrure d'aluminium, un nitrure d'aluminium et de silicium, un oxyde d'étain, un oxyde mixte de zinc et d'étain, un oxyde de silicium, un oxyde de titane, un oxynitrure de silicium, un oxynitrure d'aluminium ou un oxynitrure d'aluminium et de silicium. De préférence encore, le ou les modules $M_1$, $M_2$ sont à base de matériaux choisis parmi un nitrure de silicium, un nitrure d'aluminium et de silicium, un oxynitrure de silicium, ou un oxynitrure d'aluminium et de silicium.

- Le premier module $M_1$ comprend et de préférence est constitué par une couche comprenant du nitrure de silicium ou du nitrure de silicium et d'aluminium, ladite couche comprenant du nitrure de silicium ou du nitrure de silicium et d'aluminium étant de préférence encore au contact de ladite couche intermédiaire.

- Le second module $M_2$ comprend et de préférence est constitué par une couche comprenant du nitrure de silicium ou du nitrure de silicium et d'aluminium, ladite couche comprenant du nitrure de silicium ou du nitrure de silicium et d'aluminium étant de préférence encore au contact de ladite couche intermédiaire.

- Au moins l'un des modules $M_1$ ou $M_2$ comprend ou est constitué d'une couche comprenant et de préférence constituée par de l'oxynitrure de silicium et/ou d'aluminium, ladite couche comprenant de l'oxynitrure de silicium et/ou d'aluminium étant de préférence au contact de ladite couche intermédiaire.

- L'indice de réfraction à 550nm dudit oxynitrure de silicium et/ou d'aluminium est compris entre 1,60 et 1,99, de préférence entre 1,70 et 1,95. Ledit indice peut notamment être ajusté en fonction du rapport N/O dans ledit matériau.

- L'empilement comprend et de préférence est constitué par la séquence de couches suivante, à partir de la surface du substrat : une couche à base de nitrure de silicium ou à base d'oxynitrure de silicium (comprenant en outre éventuellement de l'aluminium), ladite couche intermédiaire comprenant au moins un élément choisi parmi le silicium l'aluminium, le titane, ou un mélange d'au moins deux de ces éléments, ladite couche TN1, éventuellement une deuxième couche intermédiaire comprenant au moins un élément choisi parmi le silicium l'aluminium, le titane, ou un mélange d'au moins deux de ces éléments, une couche à base de nitrure de silicium ou une couche à base d'oxynitrure de silicium (comprenant en outre éventuellement de l'aluminium), et éventuellement une couche de protection notamment choisie parmi les oxydes de titane, de zirconium ou un mélange de titane et de zirconium.

- L'empilement comprend et de préférence est constitué par la séquence de couches suivante, à partir de la surface du substrat : une couche à base de nitrure de silicium ou à base d'oxynitrure de silicium (comprenant en outre éventuellement de l'aluminium), éventuellement une autre couche intermédiaire comprenant au moins un élément choisi parmi le silicium l'aluminium, le titane, ou un mélange d'au moins deux de ces éléments, ladite couche $TN_1$, ladite couche intermédiaire comprenant au moins un élément choisi parmi le silicium, l'aluminium, le titane, ou un mélange d'au moins deux de ces éléments, une couche à base de nitrure de silicium ou une couche à base d'oxynitrure de silicium (comprenant en outre éventuellement de l'aluminium), et éventuellement une couche de protection notamment choisie parmi les oxydes de titane, de zirconium ou un mélange de titane et de zirconium.

- Ledit empilement comprend, à partir de la surface du substrat, la succession des couches suivantes, chaque couche étant successivement au contact de la suivante :

  $SiN_x$ ou SiON/ Al, Si ou Ti ou SiAl / $TiN_x$ / optionnellement Al, Si, Ti ou SiAl / $SiN_x$ ou SiON,
  ou
  $SiN_x$ ou SiON/ optionnellement Al, Si ou Ti ou SiAl / $TiN_x$ / Al, Si, Ti ou SiAl / $SiN_x$ ou SiON,

dans lequel

  - $SiN_x$ est une couche comprenant ou à base de nitrure de silicium,
  - SiON est une couche comprenant ou à base d'oxynitrure de silicium,

- Al, Si ou AlSi est une couche respectivement obtenue par dépôt d'aluminium, silicium ou d'un mélange d'aluminium et de silicium,
- $TiN_x$ est la couche $TN_1$ comprenant ou à base de nitrure de titane.

- L'empilement comprend une pluralité de couches comprenant du nitrure de titane $TN_1$, $TN_2$..., en particulier deux couches ($TN_1$ et $TN_2$) comprenant du nitrure de titane, chaque couche comprenant du nitrure de titane étant séparée de la suivante dans l'empilement par une couche à base d'un matériau diélectrique ou par un ensemble de couches à base de matériaux diélectriques et éventuellement d'une couche intermédiaire comprenant au moins un élément choisi parmi le silicium, l'aluminium, le titane et leurs mélanges.
- L'empilement ne contient pas de couche à base de cuivre.
- Le substrat verrier est en verre clair. Sans sortir du cadre de l'invention, il peut également être envisagé de déposer l'empilement sur un substrat en verre teinté ou coloré dans sa masse. Par coloré dans sa masse, on entend que le substrat comprend dans sa composition de verre des éléments visant à lui conférer une coloration (i.e. différente de celle d'un verre dit « clair »), notamment des éléments tels que le cobalt, le fer, le sélénium, voire le chrome, qui peuvent également viser à en diminuer la transmission lumineuse.
- Le substrat verrier muni dudit empilement a subi un traitement thermique après le dépôt dudit empilement, notamment est trempé, recuit ou bombé.
- L'épaisseur $e_1$ du premier module $M_1$ est comprise entre 1 nm et 100 nanomètres, bornes comprises, et en particulier entre 10 et 70 nm, bornes comprises.
- L'épaisseur $e_2$ du second module $M_2$ est comprise entre 5 nm et 100 nanomètres, bornes comprises, et en particulier entre 20 et 70 nm, bornes comprises.
- L'article verrier comprend deux substrats verriers assemblés par un feuillet thermoplastique, notamment en polyvinylbutyral PVB, au moins un desdits substrats étant muni dudit empilement de couches, ledit empilement étant disposé de préférence sur une face d'un substrat tournée vers l'intérieur dudit vitrage, ou encore au contact du feuillet thermoplastique.

De préférence, les couches fonctionnelles selon l'invention sont à base de nitrure de titane ou de préférence encore sont constituées essentiellement de nitrure de titane.

Une couche à base de nitrure de titane (ou d'un autre matériau) comprend par exemple au moins 50% poids de nitrure de titane (ou dudit autre matériau), voire plus de 60% poids de nitrure de titane (ou dudit autre matériau), ou même plus de 80% poids (ou dudit autre matériau), ou même plus de 90% poids de nitrure de titane (ou autre dudit matériau).

Le nitrure de titane selon l'invention n'est pas nécessairement stœchiométrique (ratio atomique Ti/N de 1) mais peut être sur- ou sous-stœchiométrique. Selon un mode avantageux, le ratio N/Ti est compris entre 1 et 1,2. Egalement, le nitrure de titane selon l'invention peut comprendre une quantité mineure d'oxygène, par exemple entre 1 et 10% molaire d'oxygène, notamment entre 1 et 5% molaire d'oxygène.

Selon un mode particulièrement préféré, les couches en nitrure de titane selon l'invention répondent à la formule générale $TiN_xO_y$, dans laquelle $1,00 < x < 1,20$ et dans laquelle $0,01 < y < 0,10$.

Les matériaux diélectriques, une fois déposés en couches minces, peuvent cependant comprendre des éléments supplémentaires augmentant sensiblement leur conductivité électrique, utiles par exemple pour améliorer le rendement de pulvérisation cathodique du matériau précurseur constituant la cible magnétron. Les couches diélectriques des modules $M_1$, $M_2$ selon l'invention peuvent être des couches à base d'un matériau choisi parmi un nitrure de silicium, un nitrure d'aluminium, un oxyde d'étain, un oxyde mixte de zinc ou d'étain, un oxyde de silicium, un oxyde de titane, un oxynitrure de silicium, de préférence les modules M1 et M2 sont constitués d'une couche unique et cette couche est à base de nitrure de silicium. Un matériau à base de nitrure de silicium, d'oxyde d'étain, d'oxyde mixte de zinc et d'étain, d'oxyde de silicium, d'oxyde de titane, d'oxynitrure de silicium est par exemple un matériau constitué majoritairement, et de préférence essentiellement, d'un tel composé mais pouvant également néanmoins contenir d'autres éléments minoritaires, en particulier en substitution des cations, par exemple pour en favoriser le dépôt sous forme de couches minces par les techniques habituelles de la pulvérisation magnétron comme décrit précédemment. A titre d'exemple, les couches selon la présente invention en nitrure de silicium ou en oxynitrure de silicium, voire en oxyde de silicium, notamment celles déposées par magnétron, comprennent le plus souvent des éléments du type Al, Zr, B, etc., en des proportions pouvant aller par exemple jusqu'à 10% atomique ou même parfois jusqu'à 20% atomique, sur la base de la teneur de la couche en silicium. De même, les couches en oxyde de titane peuvent comprendre en substitution du titane d'autres cations métalliques minoritaires tels que du zirconium, sans sortir du cadre de la présente invention.

Le vitrage selon l'invention peut être un vitrage simple dans lequel l'empilement de couches minces étant préférentiellement disposé en face 2 du vitrage simple en numérotant les faces du substrat de l'extérieur vers l'intérieur du bâtiment ou de l'habitacle qu'il équipe.

Les couches intermédiaires selon l'invention déposées à partir de cibles métalliques en Ti, Si, Al ou en un mélange d'au moins deux de ces éléments peuvent comprendre de l'azote, voire de l'oxygène, même avant tout traitement thermique. Ainsi des analyses SIMS (Spectrométrie de masse des ions secondaires) ont montré que lesdites couches comprenant de façon minoritaire de tels hétéroatomes, même en l'absence de gaz azote ou oxydant lors de leur dépôt par pulvérisation cathodique (notamment sous une atmosphère de 100% d'argon), sans qu'il soit possible de déterminer leur quantité exacte dans la couche en question par les techniques actuellement disponibles. Il en est de même pour les articles verriers selon l'invention.

Selon une autre réalisation, le vitrage selon l'invention peut être un vitrage feuilleté, comprenant deux substrats verriers assemblés par un feuillet thermoplastique, en particulier un feuillet en polyvinylbutyral ou PVB, ledit vitrage étant muni d'un empilement de couches tel que décrit précédemment. De préférence l'empilement est déposé sur la face du substrat tournée vers l'intérieur de la structure feuilletée, notamment en face 2 du vitrage, et de préférence encore il est au contact du feuillet thermoplastique. Alternativement il peut être déposé sur la face intérieure du vitrage feuilleté, c'est en dire en face 4 du vitrage, les faces étant numérotées conventionnellement de 1 à 4 depuis l'extérieur vers l'intérieur du vitrage.

Les substrats précédemment décrits peuvent bien évidemment être trempés thermiquement et/ou bombés après le dépôt de l'empilement selon l'invention.

Un procédé de fabrication d'un article selon l'invention comprend par exemple au moins les étapes suivantes :

- on introduit un substrat verrier dans un dispositif de pulvérisation cathodique,
- dans un ou plusieurs premier(s) compartiment(s), on dépose au moins une sous couche d'un matériau diélectrique,
- dans un autre compartiment, on pulvérise une cible en titane au moyen d'un plasma généré à partir d'un gaz comprenant de l'azote, préférentiellement en mélange avec un gaz rare tel que l'argon, dans des conditions d'obtention d'une couche de nitrure de titane,
- dans un ou plusieur(s) compartiment(s) ultérieur(s), on dépose au moins une surcouche d'un matériau diélectrique.

Selon la présente invention, dans un compartiment comprenant une cible en aluminium, en silicium, en titane ou en un mélange d'au moins deux de ces éléments, en particulier de silicium et d'aluminium, situé immédiatement avant et/ou après le compartiment équipé de la cible en titane, on dépose par pulvérisation de ladite cible et en présence d'un gaz neutre, par exemple exclusivement d'argon, une fine couche de 1 à 6 nm d'aluminium, de silicium, de titane ou en un mélange d'au moins deux de ces éléments, en particulier de silicium et d'aluminium.

Par le terme «sur-couche», il est fait référence dans la présente description à la position respective desdites couches par rapport à la ou les couches fonctionnelles dans l'empilement, ledit empilement étant supporté par le substrat verrier. En particulier, la surcouche est la couche la plus externe de l'empilement, tournée à l'opposé du substrat.

Par épaisseur d'une couche, on entend au sens de la présente invention l'épaisseur géométrique réelle de la couche, telle qu'elle peut être mesurée notamment par les techniques classiques de microscopie électronique ou autre.

L'invention et ses avantages sont décrits avec plus de détails, ci-après, au moyen des exemples non limitatifs ci-dessous selon l'invention. Dans tous les exemples et la description, à moins qu'autrement spécifié, les épaisseurs données sont géométriques.

Les propriétés et avantages des vitrages selon l'invention sont illustrés par les exemples qui suivent :
De façon bien connue, dans les exemples qui suivent, les différentes couches successives sont déposées dans des compartiments dédiés successifs du dispositif de pulvérisation cathodique, chaque compartiment étant muni d'une cible métallique spécifique en Si, Ti, Al, Al-Si, choisie pour le dépôt d'une couche spécifique de l'empilement et alimenté en une composition de gaz spécifique de la composition recherchée pour chaque couche.

Plus précisément, les couches à base de nitrure de silicium sont déposées dans des compartiments du dispositif à partir d'une cible de silicium métallique (comprenant 8% en masse d'aluminium), dans une atmosphère réactive contenant de l'argon et de l'azote selon des techniques bien connues. Les couches en nitrure de silicium contiennent donc également de l'aluminium.

La couche à base d'oxynitrure de silicium est déposée dans un compartiment du dispositif à partir de la cible en silicium métallique (comprenant 8% en masse d'aluminium), dans une atmosphère réactive contenant de l'argon, de l'azote et de l'oxygène. Les débits respectifs des gaz introduits dans le compartiment sont respectivement de 20 sccm (standard cubic centimeters per minute) d'Ar, de 5 sccm d'$O_2$, et de 100 sccm de $N_2$. L'indice de réfraction à 550 nm mesuré pour ce matériau est de 1,88.

Les couches en nitrure de titane sont déposées dans d'autres compartiments du dispositif à partir d'une cible de titane pur métallique dans une atmosphère réactive contenant de l'azote et de l'argon.

Les couches en aluminium ou en alliage d'aluminium et de silicium ont été déposé à partir de la pulvérisation en atmosphère neutre d'argon de cible de la même composition.

Les couches en titane ont été déposées à partir d'une cible de titane pur métallique dans une atmosphère neutre d'argon.

Les conditions de dépôt par magnétron de telles couches, notamment pour l'obtention d'une épaisseur désirée de chaque couche de l'empilement, sont techniquement bien connues dans le domaine.

Exemple 1 :

Selon l'exemple 1 de référence, le substrat verrier est recouvert successivement d'un empilement de couches comprenant une sous-couche (couche $M_1$) à base de nitrure de silicium (notées par commodité $Si_3N_4$ par la suite même si la stoechiométrie réelle de la couche n'est pas forcément celle-ci), une couche fonctionnelle à base de nitrure de titane, une sur-couche (couche $M_2$) également à base de nitrure de silicium (notées par commodité $Si_3N_4$ par la suite même si la stoechiométrie réelle de la couche n'est pas forcément celle-ci).

Exemples 2 et 3 :

Selon les exemples 2 et 3 selon l'invention, une couche intermédiaire en aluminium (exemple 2) ou en un alliage de silicium et d'aluminium comprenant 8% poids d'aluminium (exemple 3) sont déposées au-dessus de la couche de nitrure de titane (c'est-à-dire entre la couche de TiN et la surcouche de $Si_3N_4$) dans l'empilement de l'exemple 1 de référence.

Exemple 4 :

Selon l'exemple 4 selon l'invention, une couche intermédiaire de deux nanomètres de titane métallique est déposée entre la couche de TiN et la sous-couche de $Si_3N_4$ dans l'empilement de l'exemple 1 de référence.

Exemple 5 :

Selon l'exemple 5 selon l'invention, une couche intermédiaire d'un nanomètre de titane métallique est déposée entre la couche de TiN et la surcouche de $Si_3N_4$ et une autre couche d'un nanomètre de titane métallique est insérée entre la couche de TiN et la sous-couche de $Si_3N_4$.

Exemple 6 :

Selon l'exemple 6 comparatif, une couche intermédiaire de nickel chrome (80% poids de nickel, 20% poids de chrome) est déposée entre la couche de TiN et la surcouche de $Si_3N_4$ dans l'empilement de l'exemple 1 de référence.

Exemple 7 :

Selon l'exemple 7 comparatif, une couche intermédiaire de nitrure de niobium d'épaisseur 2 nm est insérée entre la couche de TiN et la surcouche de $Si_3N_4$ dans l'empilement de l'exemple 1 de référence.

Exemple 8 :

Dans cet exemple, on a remplacé dans l'exemple 2 la surcouche de nitrure de silicium constituant le module $M_2$ par une couche d'oxynitrure de silicium d'indice de réfraction à 550 nm égal à 1,88.

Tous les substrats sont en verre clair de 4 mm d'épaisseur Planiclear® commercialisé par la société Saint-Gobain Glass France. Toutes les couches sont déposées de façon connue par pulvérisation cathodique assistée par champ magnétique (souvent appelé magnétron).

Les conditions de dépôt ont été ajustées selon les techniques classiques pour un dépôt magnétron pour l'obtention de différents empilements dont la succession de couches et leurs épaisseurs (en nanomètres nm) sont reportées dans le tableau 1 qui suit :

[Table 1]

| | $Si_3N_4$ ($M_1$) | CI* | TiN ($TN_1$) | CI* | $Si_3N_4$ ($M_2$) | Nature dépôt Cl |
|---|---|---|---|---|---|---|
| Exemple 1 (référence) | 30 | - | 20 | - | 30 | - |
| Exemple 2 (invention) | 30 | - | 20 | 2 | 30 | Al |
| Exemple 3 (invention) | 30 | - | 20 | 2 | 30 | Si-Al |
| Exemple 4 (invention) | 30 | 2 | 20 | - | 30 | Ti |
| Exemple 5 (invention) | 30 | 1 | 20 | 1 | 30 | Ti |
| Exemple 6 (comparatif) | 30 | - | 20 | 2 | 30 | NiCr |

(suite)

|  | Si$_3$N$_4$ (M$_1$) | CI* | TiN (TN$_1$) | CI* | Si$_3$N$_4$ (M$_2$) | Nature dépôt CI |
|---|---|---|---|---|---|---|
| Exemple 7 (comparatif) | 30 | - | 20 | 2 | 30 | NbN |
| Exemple 8 (invention) | 30 | - | 20 | 3 | 30** | Al |
| *CI : couche Intermédiaire<br>** oxynitrure de silicium SiON d'indice de réfraction de 1,88 à 550 nm. | | | | | | |

Tous les vitrages ainsi obtenus selon les exemples 1 à 8 sont ensuite soumis à un traitement thermique à 650°C pendant 10 minutes.

A-Mesure des caractéristiques des vitrages

Les caractéristiques thermique et optique des vitrages avant et après trempe ont été mesurées selon les principes et normes suivants :

1°) Propriétés optiques:
Les mesures sont effectuées conformément à la norme NF EN410 (2011) citée précédemment. Plus précisément, la transmission lumineuse $T_L$ est mesurée entre 380 et 780 nm selon l'illuminant $D_{65}$.
2°) Propriétés thermiques :
L'émissivité normale $\varepsilon_n$ a été mesurée selon la norme ISO 10292 mentionnée précédemment.

B-Résultats

Les résultats obtenus pour les vitrages monolithiques selon les exemples décrits précédemment sont regroupés dans le tableau 2 qui suit :

[Table 2]

| Exemple | $T_L$ après trempe | $\varepsilon_n$ après trempe | $T_L/\varepsilon_n$ après trempe |
|---|---|---|---|
| 1 (ref.) | 54,1 | 40,6 | 1,33 |
| 2 (inv.) | 54,5 | 37,9 | 1,44 |
| 3 (inv.) | 55,5 | 38,0 | 1,46 |
| 4 (inv.) | 52,7 | 34,8 | 1,51 |
| 5 (inv.) | 50,7 | 32,6 | 1,56 |
| 6 (comp.) | 48,5 | 35,8 | 1,35 |
| 7 (comp.) | 52,5 | 49 | 1,07 |
| 8(inv.) | 53,5 | 34,9 | 1,53 |

Les exemples 2 à 3 sont des exemples conformes à la présente invention. On observe pour ces deux exemples après la trempe une transmission lumineuse de l'ordre de 55%, de façon étonnante supérieure à celle du même empilement sans la couche intermédiaire en aluminium ou en un alliage Si-Al selon l'invention. Selon une caractéristique avantageuse, l'émissivité en incidence normale est en outre sensiblement diminuée par rapport à l'exemple de référence 1.

Les exemples 4 et 5 conformes à la présente invention montrent une légère diminution de la transmission lumineuse mais également une émissivité très diminuée par rapport à l'empilement de référence.

Au final, l'utilisation de la couche intermédiaire dans l'empilement selon l'invention permet donc d'obtenir une transmission lumineuse égale ou sensiblement comparable à celle de l'empilement de référence, tout en améliorant les propriétés thermiques du vitrage.

Au final, on observe que la sélectivité du vitrage, tel que mesurée par le ratio $T_L/\varepsilon_n$, est sensiblement améliorée pour les vitrages selon l'invention, notamment après la trempe.

Le vitrage comparatif selon l'exemple 6, comprenant une couche intermédiaire en un alliage NiCr, présente une transmission lumineuse sensiblement diminuée par rapport à l'exemple de référence et aux exemples selon l'invention et au final une sélectivité qui est sensiblement égale au vitrage de référence.

Le vitrage comparatif selon l'exemple 7, comprenant une couche intermédiaire en NbN, présente une sélectivité dégradée par rapport à l'exemple de référence.

Le vitrage selon l'exemple 8, dans lequel une couche en oxynitrure de silicium (et d'aluminium) est utilisée au contact de la couche intermédiaire, présente également une sélectivité améliorée par rapport à l'exemple de référence.

Si on regarde les sélectivités $T_L/\varepsilon_n$ des vitrages selon les exemples 1 à 8, telles que reportées dans le tableau 2, on peut voir au final que les vitrages selon l'invention présentent les meilleures sélectivités, après avoir subi un traitement thermique.

Selon d'autres exemples complémentaires, on cherche à déterminer quelle épaisseur d'aluminium, utilisé pour constituer la couche intermédiaire, est optimale pour la sélectivité, en faisant varier ladite épaisseur dans l'empilement décrit selon l'exemple 2 qui précède. Les résultats obtenus sont reportés dans le tableau 3 ci-dessous :

[Table 3]

| Exemple | Epaisseur couche Al (nm) | $T_L$ après trempe | $\varepsilon_n$ après trempe | $T_L/\varepsilon_n$ après trempe |
|---------|--------------------------|--------------------|------------------------------|----------------------------------|
| 1 (ref.) | 0 | 54,1 | 40,6 | 1,33 |
| 2 | 2 | 54,5 | 37,9 | 1,44 |
| 2a | 1 | 54,7 | 40,1 | 1,44 |
| 2b | 3 | 54,9 | 34,1 | 1,61 |
| 2c | 4 | 52,9 | 32,8 | 1,61 |
| 2d | 5 | 51,3 | 32,9 | 1,56 |

L'analyse des données reportées dans le tableau 3 montre que les meilleurs résultats et compromis sont obtenus lorsque l'épaisseur de la couche intermédiaire d'aluminium est comprise entre 2 et 4 nm.

## Revendications

**1.** Article verrier à propriétés antisolaires comprenant au moins un substrat verrier muni d'un empilement de couches, dans lequel l'empilement comprend successivement depuis la surface dudit substrat :

- un premier module $M_1$ constitué par une couche à base d'un matériau diélectrique d'épaisseur $e_1$ ou par un ensemble de couches à base de matériaux diélectriques d'épaisseur cumulée $e_1$, ladite épaisseur $e_1$ étant comprise entre 1 et 100 nm, de préférence entre 5 et 80 nm, en particulier entre 10 nm et 70 nm,
- une couche $TN_1$ comprenant du nitrure de titane et de préférence à base de nitrure de titane, d'épaisseur comprise entre 2 nanomètres et 80 nanomètres, de préférence entre 4 et 70 nanomètres, de préférence encore entre 10 et 50 nm,
- un second module $M_2$ constitué par une couche à base d'un matériau diélectrique d'épaisseur $e_2$ ou par un ensemble de couches à base de matériaux diélectriques d'épaisseur cumulée $e_2$, ladite épaisseur $e_2$ étant comprise entre 5 et 100 nm, de préférence entre 20 et 70 nm,
dans lequel une couche intermédiaire comprenant, et de préférence constituée essentiellement par, au moins un élément choisi parmi le silicium, l'aluminium, le titane ou un mélange d'au moins deux de ces éléments est déposée entre ladite couche $TN_1$ et ledit premier module $M_1$ et/ou entre ladite couche $TN_1$ et ledit second module $M_2$, la ou lesdites couche(s) intermédiaire(s) étant d'épaisseur comprise entre 0,2 nm et 6 nm, de préférence entre 0,5 et 5 nm, de préférence encore entre 1 et 4 nm,
et dans lequel l'empilement ne contient pas de couche à base d'argent, de platine ou d'or.

**2.** Article verrier selon la revendication 1 dans lequel ledit élément déposé pour constituer la ou les couches intermédiaires est essentiellement l'aluminium.

**3.** Article verrier selon la revendication 1 dans lequel ledit élément déposé pour constituer la ou les couches intermédiaires est essentiellement le silicium.

**4.** Article verrier selon la revendication 1 dans lequel les éléments déposés pour constituer la ou les couches intermédiaires sont essentiellement le silicium et l'aluminium.

5. Article verrier selon la revendication 1 dans lequel ledit élément déposé pour constituer la ou les couches intermédiaires est essentiellement le titane.

6. Article verrier selon l'une des revendications précédentes, dans lequel le ou les modules $M_1$, $M_2$ comprennent des matériaux choisis parmi un nitrure de silicium, un nitrure d'aluminium, un nitrure d'aluminium et de silicium, un oxyde d'étain, un oxyde mixte de zinc et d'étain, un oxyde de silicium, un oxyde de titane, un oxynitrure de silicium.

7. Article verrier selon l'une des revendications précédentes, le premier module $M_1$ comprend et de préférence est constitué par une couche comprenant du nitrure de silicium ou du nitrure de silicium et d'aluminium, ladite couche comprenant du nitrure de silicium ou du nitrure de silicium et d'aluminium étant au contact d'une couche intermédiaire.

8. Article verrier selon l'une des revendications précédentes, le second module $M_2$ comprend et de préférence est constitué par une couche comprenant du nitrure de silicium ou du nitrure de silicium et d'aluminium, ladite couche comprenant du nitrure de silicium ou du nitrure de silicium et d'aluminium étant au contact d'une couche intermédiaire.

9. Article verrier selon l'une des revendications précédentes, au moins l'un des modules $M_1$ ou $M_2$ comprend et de préférence est constitué par une couche comprenant un oxynitrure de silicium et/ou d'aluminium, la couche d'oxynitrure de silicium et/ou d'aluminium étant au contact d'une couche intermédiaire.

10. Article verrier selon l'une des revendications précédentes, dans lequel l'empilement comprend et de préférence est constitué par la séquence de couches suivante, à partir de la surface du substrat : une couche à base de nitrure de silicium ou à base d'oxynitrure de silicium, ladite couche intermédiaire comprenant au moins un élément choisi parmi le silicium l'aluminium, le titane, ou un mélange d'au moins deux de ces éléments, ladite couche TN1, éventuellement une deuxième couche intermédiaire comprenant au moins un élément choisi parmi le silicium l'aluminium, le titane, ou un mélange d'au moins deux de ces éléments, une couche à base de nitrure de silicium ou une couche à base d'oxynitrure de silicium, et éventuellement une couche de protection notamment choisie parmi les oxydes de titane, de zirconium ou un mélange de titane et de zirconium.

11. Article verrier selon l'une des revendications 1 à 9, dans lequel l'empilement comprend et de préférence est constitué par la séquence de couches suivante, à partir de la surface du substrat : une couche à base de nitrure de silicium ou à base d'oxynitrure de silicium, éventuellement une autre couche intermédiaire comprenant au moins un élément choisi parmi le silicium l'aluminium, le titane, ou un mélange d'au moins deux de ces éléments, ladite couche TN1, ladite couche intermédiaire comprenant au moins un élément choisi parmi le silicium l'aluminium, une couche à base de nitrure de silicium ou une couche à base d'oxynitrure de silicium, et éventuellement une couche de protection notamment choisie parmi les oxydes de titane, de zirconium ou un mélange de titane et de zirconium.

12. Article verrier selon l'une des revendications précédentes, dans lequel l'empilement comprend une pluralité de couches comprenant du nitrure de titane, chaque couche comprenant du nitrure de titane étant séparée de la suivante dans l'empilement par une couche à base d'un matériau diélectrique ou par un ensemble de couches à base de matériaux diélectriques et éventuellement d'une couche intermédiaire comprenant au moins un élément choisi parmi le silicium et/ou l'aluminium.

13. Article verrier selon l'une des revendications précédentes, dans lequel le substrat verrier est en verre clair.

14. Article verrier selon l'une des revendications précédentes, dans lequel le ou lesdits substrats verriers munis dudit empilement sont trempés ou bombés.

15. Article verrier selon l'une des revendications précédentes, dans lequel le module $M_1$, la couche $TN_1$, le module $M_2$ et la ou les couches intermédiaires sont déposées successivement et au contact les uns des autres.

**Patentansprüche**

1. Glasartikel mit Sonnenschutzeigenschaften, umfassend mindestens ein Glassubstrat, das mit einem Schichtenstapel versehen ist, wobei der Stapel aufeinanderfolgend von der Oberfläche des Substrats aus umfasst:

- ein erstes Modul $M_1$, bestehend aus einer Schicht auf Basis eines dielektrischen Materials mit einer Dicke $e_1$ oder aus einer Anordnung von Schichten auf Basis dielektrischer Materialien mit kumulativer Dicke $e_1$, wobei die

Dicke $e_1$ zwischen 1 und 100 nm, vorzugsweise zwischen 5 und 80 nm, insbesondere zwischen 10 nm und 70 nm, liegt,
- eine Schicht $TN_1$, umfassend Titannitrid und vorzugsweise auf Basis von Titannitrid, mit einer Dicke zwischen 2 Nanometer und 80 Nanometer, vorzugsweise zwischen 4 und 70 Nanometer, stärker bevorzugt zwischen 10 und 50 Nanometer,
- ein zweites Modul $M_2$, bestehend aus einer Schicht auf Basis eines dielektrischen Materials mit einer Dicke $e_2$ oder aus einer Anordnung von Schichten auf Basis dielektrischer Materialien mit kumulativer Dicke $e_2$, wobei die Dicke $e_2$ zwischen 5 und 100 nm, vorzugsweise zwischen 20 und 70 nm, liegt,

wobei eine Zwischenschicht, die mindestens ein aus Silizium, Aluminium und Titan ausgewähltes Element oder eine Mischung aus mindestens zwei dieser Elemente umfasst und vorzugsweise im Wesentlichen daraus besteht, zwischen der Schicht $TN_1$ und dem ersten Modul $M_1$ und/oder zwischen der Schicht $TN_1$ und dem zweiten Modul $M_2$ abgeschieden ist, wobei die Zwischenschicht(en) eine Dicke zwischen 0,2 nm und 6 nm, vorzugsweise zwischen 0,5 und 5 nm, stärker bevorzugt zwischen 1 und 4 nm, aufweist/aufweisen, und wobei der Stapel keine auf Silber, Platin oder Gold basierende Schicht enthält.

2. Glasartikel nach Anspruch 1, wobei das zur Bildung der Zwischenschicht(en) abgeschiedene Element im Wesentlichen Aluminium ist/sind.

3. Glasartikel nach Anspruch 1, wobei das zur Bildung der Zwischenschicht(en) abgeschiedene Element im Wesentlichen Silizium ist/sind.

4. Glasartikel nach Anspruch 1, wobei die zur Bildung der Zwischenschicht(en) abgeschiedenen Elemente im Wesentlichen Silizium und Aluminium ist/sind.

5. Glasartikel nach Anspruch 1, wobei das zur Bildung der Zwischenschicht(en) abgeschiedene Element im Wesentlichen Titan ist/sind.

6. Glasartikel nach einem der vorhergehenden Ansprüche, wobei das oder die Modul(e) $M_1$, $M_2$ Materialien umfassen, die aus Siliziumnitrid, Aluminiumnitrid, Siliziumaluminiumnitrid, Zinnoxid, gemischtem Zink- und Zinnoxid, Siliziumoxid, Titanoxid, Siliziumoxynitrid ausgewählt sind.

7. Glasartikel nach einem der vorhergehenden Ansprüche, wobei das erste Modul $M_1$ eine Schicht umfasst, die Siliziumnitrid oder Siliziumaluminiumnitrid umfasst und vorzugsweise daraus besteht, wobei die Siliziumnitrid oder Siliziumaluminiumnitrid umfassende Schicht mit einer Zwischenschicht in Kontakt steht.

8. Glasartikel nach einem der vorhergehenden Ansprüche, wobei das zweite Modul $M_2$ eine Schicht umfasst, die Siliziumnitrid oder Siliziumaluminiumnitrid umfasst und vorzugsweise daraus besteht, wobei die Siliziumnitrid oder Siliziumaluminiumnitrid umfassende Schicht mit einer Zwischenschicht in Kontakt steht.

9. Glasartikel nach einem der vorhergehenden Ansprüche, wobei mindestens eines der Module $M_1$ oder $M_2$ eine Schicht umfasst und vorzugsweise daraus besteht, die ein Silizium- und/oder Aluminiumoxynitrid umfasst, wobei die Silizium- und/oder Aluminiumoxynitridschicht mit einer Zwischenschicht in Kontakt steht.

10. Glasartikel nach einem der vorhergehenden Ansprüche, wobei der Stapel ausgehend von der Oberfläche des Substrats die folgende Schichtfolge umfasst und vorzugsweise daraus besteht: eine Schicht auf Basis von Siliziumnitrid oder auf Basis von Siliziumoxynitrid, wobei die Zwischenschicht mindestens ein aus Silizium, Aluminium und Titan ausgewähltes Element oder eine Mischung aus mindestens zwei dieser Elemente umfasst, die Schicht $TN_1$, eventuell eine zweite Zwischenschicht, die mindestens ein aus Silizium, Aluminium und Titan ausgewähltes Element oder eine Mischung aus mindestens zwei dieser Elemente umfasst, eine Schicht auf Basis von Siliziumnitrid oder eine Schicht auf Basis von Siliziumoxynitrid und eventuell eine Schutzschicht, die insbesondere aus Titanoxiden, Zirkonium oder einer Mischung aus Titan und Zirkonium ausgewählt ist.

11. Glasartikel nach einem der Ansprüche 1 bis 9, wobei der Stapel ausgehend von der Oberfläche des Substrats die folgende Schichtfolge umfasst und vorzugsweise daraus besteht: eine Schicht auf Basis von Siliziumnitrid oder auf Basis von Siliziumoxynitrid, eventuell eine weitere Zwischenschicht, die mindestens ein aus Silizium, Aluminium und Titan ausgewähltes Element oder eine Mischung aus mindestens zwei dieser Elemente umfasst, die Schicht $TN_1$, die Zwischenschicht, die mindestens ein aus Silizium und Aluminium ausgewähltes Element umfasst, eine Schicht auf Basis von Siliziumnitrid oder eine Schicht auf Basis von Siliziumoxynitrid und eventuell eine Schutzschicht, die insbesondere aus Titanoxiden, Zirkonium oder einer Mischung aus Titan und Zirkonium ausgewählt ist.

12. Glasartikel nach einem der vorhergehenden Ansprüche, wobei der Stapel eine Vielzahl von Titannitrid umfassendem Schichten umfasst, wobei jede Titannitrid umfassende Schicht von der nächsten Schicht im Stapel durch eine Schicht auf Basis eines dielektrischen Materials oder durch eine Anordnung von Schichten auf Basis dielektrischer Materialien und eventuell eine Zwischenschicht, die mindestens ein aus Silizium und/oder Aluminium ausgewähltes Element umfasst, getrennt ist.

13. Glasartikel nach einem der vorhergehenden Ansprüche, wobei das Glassubstrat ein Klarglas ist.

14. Glasartikel nach einem der vorhergehenden Ansprüche, wobei das bzw. die mit dem Stapel versehene(n) Glassubstrat(e) gehärtet oder gebogen ist/sind.

15. Glasartikel nach einem der vorhergehenden Ansprüche, wobei das Modul $M_1$, die Schicht $TN_1$, das Modul $M_2$ und die Zwischenschicht(en) nacheinander und in Kontakt miteinander abgeschieden werden.

**Claims**

1. A glass article having anti-sun properties comprising at least one glass substrate provided with a stack of layers, wherein the stack comprises, successively from the surface of said substrate:

   - a first module $M_1$ consisting of a layer based on a dielectric material with a thickness $e_1$ or of a set of layers based on dielectric materials with a cumulative thickness $e_1$, said thickness $e_1$ being between 1 and 100 nm, preferably between 5 and 80 nm, in particular between 10 nm and 70 nm,
   - a layer $TN_1$ comprising titanium nitride and preferably based on titanium nitride, with a thickness of between 2 nanometers and 80 nanometers, preferably between 4 and 70 nanometers, more preferably between 10 and 50 nm,
   - a second module $M_2$ consisting of a layer based on a dielectric material with a thickness $e_2$ or of a set of layers based on dielectric materials with a cumulative thickness $e_2$, said thickness $e_2$ being between 5 and 100 nm, preferably between 20 and 70 nm,

   and wherein an intermediate layer comprising, and preferably consisting substantially of, at least one element selected from silicon, aluminum, titanium or a mixture of at least two of these elements is deposited between said layer $TN_1$ and said first module $M_1$ and/or between said layer $TN_1$ and said second module $M_2$, said intermediate layer(s) having a thickness of between 0.2 nm and 6 nm, preferably between 0.5 nm and 5 nm, and more preferably between 1 and 4 nm and wherein the stack contains no silver, platinum or gold-based layers..

2. The glass article according to claim 1, wherein said element deposited to constitute the intermediate layer(s) is substantially aluminum.

3. The glass article according to claim 1, wherein said element deposited to constitute the intermediate layer(s) is substantially silicon.

4. The glass article according to claim 1, wherein said elements deposited to constitute the intermediate layer(s) are substantially silicon and aluminum.

5. The glass article according to claim 1, wherein said element deposited to constitute the intermediate layer(s) is substantially titanium.

6. The glass article according to one of the preceding claims, wherein the modules $M_1$, $M_2$ comprise materials selected from silicon nitride, aluminum nitride, aluminum-silicon nitride, tin oxide, mixed oxide of zinc and tin, silicon oxide, titanium oxide and silicon oxynitride.

7. The glass article according to one of the preceding claims, the first module $M_1$ comprises and preferably consists of a layer comprising silicon nitride or silicon-aluminum nitride, said layer comprising silicon nitride or silicon-aluminum nitride still contacting an intermediate layer.

8. The glass article according to one of the preceding claims, the second module $M_2$ comprises and preferably consists of a layer comprising silicon nitride or silicon-aluminum nitride, said layer comprising silicon nitride or silicon-aluminum nitride still contacting an intermediate layer.

9. The glass article according to one of the preceding claims, at least one of the modules $M_1$ or $M_2$ comprises and preferably consists of a layer comprising silicon oxynitride and/or aluminum oxynitride, the layer of silicon oxynitride and/or aluminum oxynitride still contacting an intermediate layer.

10. The glass article according to one of the preceding claims, wherein the stack comprises and preferably consists of the following sequence of layers, starting from the substrate surface: a layer based on silicon nitride or based on silicon oxynitride said intermediate layer comprising at least one element selected from silicon aluminum, titanium, or a mixture of at least two of these elements, said layer TN1, optionally a second intermediate layer comprising at least one element selected from silicon aluminum, titanium, or a mixture of at least two of these elements, a layer based on silicon nitride or a layer based on silicon oxynitride, and optionally a protective layer selected in particular from oxides of titanium, zirconium or a mixture of titanium and zirconium.

11. The glass article according to one claims 1 to 9, wherein the stack comprises and preferably consists of the following sequence of layers, starting from the substrate surface: a layer based on silicon nitride or based on silicon oxynitride, optionally another intermediate layer comprising at least one element selected from silicon aluminum, titanium, or a mixture of at least two of these elements, said layer $TN_1$, said intermediate layer comprising at least one element selected from silicon aluminum, a layer based on silicon nitride or a layer based on silicon oxynitride, and optionally a protective layer selected in particular from oxides of titanium, zirconium or a mixture of titanium and zirconium.

12. The glass article according to one of the preceding claims, wherein the stack comprises a plurality of layers comprising titanium nitride, each layer comprising titanium nitride being separated from the next one in the stack by a layer based on a dielectric material or by a set of layers based on dielectric materials, and optionally an intermediate layer comprising at least one element selected from silicon and/or aluminum.

13. The glass article according to one of the preceding claims, wherein the glass substrate is made of clear glass.

14. The glass article according to one of the preceding claims, wherein said glass substrate or substrates provided with said stack are tempered or curved.

15. The glass article according to one of the preceding claims, wherein the module $M_1$, the layer $TN_1$, the module $M_2$ and the intermediate layer(s) are deposited successively and so as to be in contact with one another.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0121540 A
- DE 102014114330
- DE 102013112990
- JP H05124839 B
- WO 0248065 A